# EUROPEAN PATENT SPECIFICATION

(11) **EP 0 617 099 B1**
(45) Date of publication and mention of the grant of the patent: **28.05.1997**
(21) Application number: 94400620.4
(22) Date of filing: 23.03.1994
(51) Int. Cl.: C09G 1/04

(54) **Polishing composition and method of treating calcium carbonate-containing surfaces**
Poliermittel und Verfahren zur Behandlung von calciumcarbonathaltigen Oberflachen
Composition de polissage et méthode pour traitement de surfaces contenant du carbonate de calcium

(30) Priority: 24.03.1993 US 36445
(43) Date of publication of application: 28.09.1994
(73) Proprietor: MINNESOTA MINING AND MANUFACTURING COMPANY, St. Paul, Minnesota 55133-3427 (US)
(72) Inventor: Wolk, Diane R., c/o Minnesota Mining and, St. Paul, Minnesota 55133-3427 (US); Harrison, James R., c/o Minnesota Mining and, St. Paul, Minnesota 55133-3427 (US); McGurran, Jon P., c/o Minnesota Mining and, St. Paul, Minnesota 55133-3427 (US); Williamson, Gary S., c/o Minnesota Mining and, St. Paul, Minnesota 55133-3427 (US)
(74) Representative: Warcoin, Jacques

(56) References cited:
- EP-A- 0 207 307
- AU-A- 55 757

## Description

The subject of this invention is the inclusion of an organic solvent in an aqueous composition used for crystallizing a calcium carbonate-containing surface such as a marble floor in combination with an abrasive article.

Crystallization is a term used in the marble flooring industry to designate a process for improving the durability of marble. An aqueous acidic solution of a fluorosilicate salt such as magnesium hexafluorosilicate is applied to the surface, followed by buffing the wetted area with a steel wool pad under a rotary floor machine. One theory is that the friction-induced heating of the floor combined with the presence of the iron in the steel wool pad causes a chemical reaction to occur at the calcium carbonate-containing surface, changing the calcium carbonate of the surface into a calcium fluoride species. Calcium fluorides are more durable to wear, more stain resistant, and glossier than the original calcium carbonate-containing surface. A discussion of the crystallization process and the materials typically used was incorporated into assignee's U.S. Patent Patent No. 5,282,900.

In the above-referenced patent, a particular nonwoven abrasive pad composition was found to be effective as the buffing pad for the crystallization process even though it had no iron content. It was argued that the industry considers nonwoven articles which are not formed from steel wool (i.e., do not contain iron) to be non-effective for crystallization of calcium carbonate-containing floors such as marble floors. It was thus surprising to the inventors to find a non-iron containing nonwoven pad construction which could be used with commonly used crystallization chemical such as acidic solutions of metal hexafluorosilicates to create the durable, glossy surface previously considered to be achievable only with the steel wool pads.

U.S. Pat. No. 4,738,876 describes the use of a glycol ether in a primer composition which is applied to a marble surface before the crystallization chemical. While there is ample documentation of crystallization chemical compositions containing metal hexafluorosilicate salts, water and adjuvant chemicals such as surfactants or wax emulsions, there is no documentation the inventors are aware of for the inclusion of an oxygenated organic compound in the crystallization chemical. This is rather surprising since hard surface cleaning chemicals and floor coatings have long been prepared with water and oxygenated organic compounds, as well as other chemicals necessary to accomplish the desired function.

In accordance with the present invention, the inventors have discovered that the inclusion of certain oxygenated organic compounds in crystallization compositions have a significant effect in reducing "drag" (friction) while crystallizing the surface. Further, some of the preferred oxygenated organic compounds, when used with water and a metal hexafluorosilicate compound, remarkably improve "gloss" (shininess) of the surface.

Thus, one aspect of the invention is a composition suitable for crystallizing calcium carbonate-containing surfaces, the composition characterized by an effective amount of an oxygenated organic compound, the organic compound having being at least slightly water soluble (water solubility greater than 0.1 weight percent at 20°C) and having from 2 to 10 carbon atoms, an effective amount of a metal hexafluorosilicate salt, preferably magnesium hexafluorosilicate (MgSiF₆·6H₂0), and water.

Compositions within this aspect of the invention have proven useful for crystallizing (i.e., increasing durability) and preferably polishing (i.e., increasing the gloss) of calcium carbonate-containing surfaces, depending on the oxygenated organic compound employed and its concentration. The presence of the oxygenated organic compound, preferably propylene glycol monomethyl ether, has been found to reduce the drag of conventional floor maintenance machines without reducing (or actually improving in some instances) the gloss achieve when one uses a noniron-containing nonwoven abrasive article. The reduction in drag therefore makes the noniron-containing nonwoven article more acceptable to the user since the problems associated with steel wool (i.e., rusting, splintering, color transfer to the floor, and the like) are reduced or eliminated. The drag reduction also helps to reduce operator fatigue which serves to increase productivity. In some embodiments of the composition, the oxygenated organic compound serves to increase gloss when used with steel wool pads, such as when methyl lactate and similar alkyl esters are employed.

One preferred noniron-containing nonwoven surface treating article used with the compositions of the invention comprises an open, lofty, three-dimensional nonwoven web comprising a plurality of thermoplastic organic fibers, a binder which adheres the fibers at points of mutual contact, and abrasive particles adherently bonded to the fibers by the binder, the abrasive particles preferably having an average particle diameter ranging from about 0.1 micrometer to about 30 micrometers, more preferably ranging from about 0.1 to about 10 micrometers.

Another aspect of the invention is a system for crystallizing surfaces comprised of calcium carbonate, such as marble floors, the system characterized by:
a) the inventive crystallization composition as above described; and
b) a surface treating article selected from the group consisting of
   i) a nonwoven surface treating article comprising an open, lofty, three-dimensional nonwoven web comprising a plurality of thermoplastic organic fibers, a binder which adheres said fibers at points of mutual contact, and abrasive particles adherently bonded to the fibers by said binder, and
   ii) an article comprised of steel fibers.

Other systems within the invention may be used when it is desired to both crystallize and polish a calcium carbonate-containing surface. One system employs oxygenated organic compounds selected from the group glycol ethers and alcohols, a metal hexafluorosilicate salt, and water, with a noniron-containing nonwoven article as above described. Another preferred system for crystallizing and polishing calcium carbonate-containing surfaces employs a crystallizing composition comprising an alkyl ester having from 2 to 10 carbon atoms and which is slightly water soluble, with an abrasive article comprised of steel fibers, preferably steel wool.

A further aspect of the invention is a method of crystallizing calcium carbonate-containing surfaces employing the systems of the invention. One method includes the steps of:
a) applying a crystallization agent of the invention, either to a stone surface comprised of calcium carbonate or to a nonwoven surface treating article, or both, the composition comprising an effective amount of an oxygenated organic compound, the organic compound being at least slightly water soluble and having from 2 to 10 carbon atoms, an effective amount of a metal hexafluorosilicate salt, preferably magnesium hexafluorosilicate (MgSiF₆·6H₂0), and water, wherein the nonwoven surface treating article comprises an open, lofty, three-dimensional nonwoven abrasive web comprising a plurality of thermoplastic organic fibers, a binder, and abrasive particles, preferably having an average particle diameter ranging from about 0.1 micrometer to about 30 micrometers; and
b) contacting the nonwoven surface treating article with the calcium carbonate-containing surface, in the presence of the crystallization composition, while causing relative movement between the surface and the article for a time sufficient to produce a durable finish on the surface comprising calcium carbonate.

Preferred are those methods wherein the system both crystallizes and polishes the surface, and where the crystallization composition is in liquid form and is applied or sprayed onto the surface comprised of calcium carbonate and/or the abrasive article prior to step b).

Compositions of the invention suitable for use in crystallizing calcium carbonate-containing surfaces comprise an effective amount of an oxygenated organic compound, a metal hexafluorosilicate, and water, wherein the organic compound is at least slightly water soluble and has from 2 to 10 carbon atoms.
Advantageously, the oxygenated organic compound will be sufficiently water soluble and have an evaporation rate such that when the crystallizing compositions of the invention are applied to the surface treating article or calcium carbonate-containing surface, a significant reduction in drag is achieved with a rotary buffing machine, and preferably an increase in gloss is produced.

Preferably, the oxygenated organic compound has from 4 to 8 carbon atoms, and is selected from the group consisting of glycol ethers, alkyl alcohols, and alkyl esters within the water solubility and number of carbon atom constraints mentioned above. Preferred glycol ethers are propylene glycol mono-methyl ether and ethylene glycol mono-n-butyl ether. Propylene glycol mono-methyl ether is known under the commercial designations "Dowanol PM" (available from Dow Chemical Corp.) and "Propasol M" (available from Union Carbide Corp.). This organic solvent is completely soluble in water at 20°C, has a flashpoint of about 33°C and evaporation rate of 70 (n-butyl acetate = 100). One preferred alkyl ester is methyl lactate, while preferred alkyl alcohols are isobutanol and sec-butanol.

Another way of characterizing useful oxygenated organic compounds is by evaporation rate relative to a standard chemical, such as n-butyl acetate. Preferred oxygenated organic compounds have an evaporation rate ranging from about 0.5 to about 300, where n-butyl acetate has an evaporation rate of 100.

Compositions in accordance with the invention preferably have from about 5 to about 25 weight percent oxygenated organic compound. At concentrations over about 25 weight percent the oxygenated organic compound may not evaporate in a user acceptable time period, while less than about 5 weight percent oxygenated organic compound may cause the drag on a rotary buffing machine to be unpleasant for the user of the machine. Lower concentrations are typically used with the more volatile oxygenated organic compounds useful in the invention, such as isopropanol.

The metal hexafluorosilicate serves the function of reacting with the calcium in the calcium carbonate-containing surface to produce a calcium fluoride species, which is harder and more durable than calcium carbonate. Effective amounts of the metal hexafluorosilicate are used, preferably from about 10 to about 30 weight percent metal hexafluorosilicate, more preferably about 10 to about 20 weight percent of the composition of the invention.

The metal hexafluorosilicate component of the compositions of the present invention may be magnesium hexafluorosilicate (MgSiF₆·6H₂O), zinc hexafluorosilicate (ZnSiF₆), and the like. However, any metal hexafluorosilicate salt can be used as the metal hexafluorosilicate. Preferred is magnesium hexafluorosilicate. The crystallizing compositions of the present invention should have pH (negative base ten logarithm of the hydrogen ion concentration) ranging from about 1 to about 5.

Optional ingredients can be added to the crystallizing composition. Such optional ingredients include, but are not limited to, a source of free fluoride ions which may promote and accelerate the fluorination of the calcium carbonate-containing surface (such as ammonium bifluoride and the like); a gloss enhancer (such as magnesium citrate, dibasic calcium citrate, and the like); an acid to adjust the pH of the formulation, such as oxalic acid; a surfactant to aid in wetting the floor or surface being treated, such as ethoxylated linear alcohols and the like.

Calcium carbonate-containing surfaces suitable for treatment by the present compositions, systems and methods include, but are not limited to: marble, terrazzo, synthetic terrazzo, magnesite, concrete, hydraulic mosaics, quarry tile and any other calcium carbonate-containing material employed to make hard surfaces. Preferred calcium carbonate-containing surfaces for treatment include marble and terrazzo floors. Essentially any calcium carbonate-containing surface which effervesces upon the application of a dilute hydrochloric acid solution can be crystallized using the articles, system, and method of the present invention.

### Nonwoven Surface Treating Articles Abrasive Particles

The size of the abrasive particles incorporated into the nonwoven surface treating articles useful in the invention is a critical aspect of the invention only if the user desires to increase the gloss of the surface. Experiments with commercially available coated abrasive materials (such as very fine grades of sandpaper or loose abrasive particles) revealed that abrasive materials which were made using abrasive particles having average particle size of 30 micrometers or finer were especially effective at producing a high gloss (i.e., a glossmeter reading of 60 or greater using a 60° glossmeter geometry, in accordance with American Society of Testing Materials D-523) on a marble surface. Coarser grades of abrasive material failed to produce a high gloss.

It should be apparent that if the user merely desires a durable calcium carbonate-containing surface, any size abrasive particles may suffice (or none at all). Indeed, in many instances, the primary consideration is the durability of the surface produced.

In order to test the durability of marble surfaces, marble tiles have been subjected to a durability test (the Gardner durability test is described below under "Test Methods") in which a 10 weight percent tap water solution of calcium carbonate (trade designation "Gammasperse 960") is used as an abrasive medium on a standard abrasion tester (trade designation "Gardner Abrasion Tester", available from Pacific Scientific). Durability is measured by the change in gloss of a high gloss surface before and after the durability test. The less change in glossmeter reading, the more "durable" the surface on the marble test tile. A loss of glossmeter reading of 25 or less indicates an acceptable value for durability.

In one preferred system embodiment of this invention (a "system" as used herein means a combination comprising crystallization composition of the invention and an abrasive article), a nonwoven web is coated with a binder precursor solution comprising a resin in latex form, and microabrasive particles (i.e., abrasive particles having average particle diameter less than about 30 micrometers but greater then about 0.1).

Abrasive particles are preferably dispersed throughout and adhered to the fibers of the three-dimensional nonwoven web by the resins of the binders described below. Abrasive particles useful in the nonwoven surface treating articles of the present invention may be individual abrasive grains or agglomerates of individual abrasive grains.

The abrasive particles may be of any known abrasive material commonly used in the abrasives art having a hardness greater than that of marble. The CRC "Handbook of Chemistry and Physics", 61st Ed., 1980/81, p. F24 lists marble hardness = 3-4 Mohs; talc = 1 Moh; garnet = 7 Mohs; aluminum oxide = 9+ Mohs; and silicon carbide = 9+ Mohs.

Preferably, the abrasive particles have a hardness of about 6 Mohs or greater. Examples of suitable abrasive particles include individual silicon carbide abrasive grains (including refractory coated silicon carbide abrasive grains such as disclosed in U.S. Pat. No. 4,505,720), fused aluminum oxide, heat treated fused aluminum oxide, alumina zirconia (including fused alumina zirconia such as disclosed in U.S. Pat. Nos. 3,781,172; 3,891,408; and 3,893,826, commercially available form the Norton Company of Worcester, Mass., under the trade designation "NorZon"), cubic boron nitride, garnet, pumice, sand, emery, mica, corundum, quartz, diamond, boron carbide, fused alumina, sintered alumina, alpha alumina-based ceramic material (available from Minnesota Mining and Manufacturing Company (3M), St. Paul, MN, under the trade designation "Cubitron"), such as those disclosed in U.S. Pat. Nos. 4,314,827; 4,518,397; 4,574,003; 4,744,802; 4,770,671; and 4,881,951, and combinations thereof.

The abrasive particles are preferably present in a coatable binder precursor solution (containing water and/or organic solvent, latex or other resin, abrasive particles, and other ingredients) at a weight percent (per total weight of coatable solution) ranging from about 10 to about 65 weight percent, more preferably from about 40 to about 60 weight percent.

The abrasive particles are not required to be uniformly dispersed on the fibers of the nonwoven articles, but a uniform dispersion may provide more consistent abrasion characteristics.

### Nonwoven Webs

The open, lofty, nonwoven noniron-containing surface treating articles useful in the present invention are preferably made from crimped, staple, thermoplastic organic fibers such as polyamide and polyester fibers. Although crimping is not necessary to the invention, crimped, staple fibers can be processed and entangled into nonwoven webs by conventional web-forming machines such as that sold under the tradename "Rando Webber" which is commercially available from the Curlator Corporation. Methods useful for making nonwoven webs suitable for use in the invention from crimped, staple, synthetic fibers are disclosed by Hoover, et al., in U.S. Pat. Nos. 2,958,593 and 3,537,121. Continuous crimped or uncrimped fibers may also be used, but these tend to increase frictional drag of the article.

Staple fibers may be stuffer-box crimped, helically crimped as described, for example, in U.S. Pat. No. 4,893,439, or a combination of both, and the nonwoven webs useful in making nonwoven noniron-containing surface treating articles useful in the invention may optionally contain up to about 50 weight percent melt-bondable fibers, more preferably from about 20 to about 30 weight percent, to help stabilize the nonwoven web and facilitate the application of the coating resin.

Suitable staple fibers known in the art are typically made of polyester or polyamide, although it is also known to use other fibers such as rayon.

Melt-bondable fibers useful in making noniron-containing surface treating articles useful in the present invention can be made of polypropylene or other low-melting polymers such as polyesters as long as the temperature at which the melt-bondable fibers melt and thus adhere to the other fibers in the nonwoven web construction is lower than the temperature at which the staple fibers or melt-bondable fibers degrade in physical properties. Suitable and preferable melt-bondable fibers include those described in U.S. Pat. No. 5,082,720, mentioned above. Melt-bondable fibers suitable for use in this invention must be activatable at elevated temperatures below temperatures which would adversely affect the helically crimped fibers. Additionally, these fibers are preferably coprocessable with the helically crimped fibers to form a lofty, open unbonded nonwoven web using conventional web forming equipment. Typically, melt-bondable fibers have a concentric core and a sheath, have been stuffer box crimped with about 6 to about 12 crimps per 25 mm, and have a cut staple length of about 25 to about 100 mm. Composite fibers have a tenacity of about 2-3 g/denier. Alternatively, melt-bondable fibers may be of a side-by-side construction or of eccentric core and sheath construction.

Preferred fibers for use in making noniron-containing nonwovens for use in this invention are helically crimped polyester staple fibers in combination with a low-melting polyester melt-bondable fiber. Particularly preferable are helically crimped polyethylene terephthalate (PET) fibers.

U.S. Pat. No. 3,595,738 discloses methods for the manufacture of helically crimped bicomponent polyester fibers suitable for use in this invention. The fibers produced by the method of that patent have a reversing helical crimp. Fibers having a reversing helical crimp are preferred over fibers that are crimped in a coiled configuration like a coiled spring. However, both types of helically crimped fibers are suitable for this invention. U.S. Pat. Nos. 3,868,749, 3,619,874, and 2,931,089 disclose various methods of edge crimping synthetic organic fibers to produce helically crimped fibers.

Helically crimped fibers typically and preferably have from about 1 to about 15 full cycle crimps per 25 mm fiber length, while stuffer box crimped fibers have about 3 to about 15 full cycle crimps per 25 mm fiber length. As taught in the '439 patent, when helically crimped fibers are used in conjunction with stuffer box crimped fibers, preferably the helically crimped fibers have fewer crimps per specified length than the stuffer box fibers.

Crimp index, a measure of fiber elasticity, preferably ranges from about 35 to about 70 percent for helically crimped fibers, which is about the same as stuffer box crimped fibers. Crimp index can be determined by measuring fiber length with appropriate "high load" attached, then subtracting fiber length with appropriate "low load" attached, and then dividing the result value by the high load fiber length and multiplying that value by 100. (The values of the appropriate "high load" and "low load" depend on the fiber denier. For organic fibers useful in the invention having 50-100 denier, low load is about 0.1-0.2 grams, high load is about 5-10 grams.) The crimp index can also be determined after exposing the test fibers to an elevated temperature, e.g., 135°C to 175°C for 5 to 15 minutes, and this value compared with the index before heat exposure. Crimp index measured after the fiber is exposed for 5 to 15 minutes to an elevate temperature, e.g., 135°C to 175°C, should not significantly change from that measured before the heat exposure. The load can be applied either horizontally or vertically.

The length of the fibers employed is dependent on upon the limitations of the processing equipment upon which the nonwoven open web is formed. However, depending on types of equipment, fibers of different lengths, or combinations thereof, very likely can be utilized in forming the lofty open webs of the desired ultimate characteristics specified herein. Fiber lengths suitable for helically crimped fibers preferably range from about 60 mm to about 150 mm, whereas suitable fiber lengths for stuffer box fibers range from about 25 to about 70 mm.

Unlike other nonwoven abrasive products, the thickness (denier, or grams per 9000 meters of fiber) of the fibers used making the noniron-containing nonwoven surface treating articles useful in the present invention is critical. As is generally known in the nonwoven abrasives field, larger denier fibers are preferred for more abrasive articles, smaller denier fibers are preferred for less abrasive articles, and fiber size must be suitable for lofty, open, low density abrasive products. Although the denier of fibers typically used for nonwoven abrasive articles may range broadly from about 6 to about 400, fiber size for nonwoven surface treating articles of the invention ranges from 15 to 200 denier, more preferably from 15 to 100 denier. Finer deniers than about 15 result in increased frictional drag when the noniron-containing nonwoven surface treating articles useful in this invention are attached to conventional floor machines (i.e., one designed to rotate and force the abrasive article against the surface and thus finish the surface). Fiber deniers larger than about 200 typically reduce drag, but torque from the floor machine may twist the web rather than rotate the web as is desired.

The noniron-containing nonwoven surface treating articles useful in the invention, when formed for use as floor pads for use in conventional floor machines, such as that commercially available, for example, from Miracle Sealants Company, El Monte, California, preferably have a non-compressed thickness of at least about 0.5 cm, more preferably ranging from about 2 cm to about 4 cm. As mentioned above, the thickness is dependent upon the fiber denier chosen for the particular application. If the fiber denier is too fine, the nonwoven surface treating articles will be less lofty and open, and thus thinner, resulting in the article tending to be more easily loaded with crystallization chemical and detritus from the floor or surface being treated.

### Binder Compositions

Binders suitable for use in making noniron-containing nonwoven surface treating articles useful in the invention may comprise any thermoplastic or thermoset resin suitable for manufacture of nonwoven articles, but it will be clear to those skilled in the art of such manufacture that the resin in its final, cured state must be compatible (or capable of being rendered compatible) with the fibers of choice.

The cured resin preferably adheres to all of the types of fibers in a particular nonwoven article of the invention, thus deterring (preferably preventing) the subsequently made nonwoven surface treating article from becoming prematurely worn during use. In addition, cured resins suitable for use in the invention preferably adhere to the abrasive particles so as to prevent the particles from prematurely loosening from the nonwoven surface treating articles of the invention during use, but should allow the presentation of new abrasive particles to the surface being treated.

Another consideration is that the cured resin should be soft enough to allow the nonwoven surface treating articles to be somewhat flexible during use as a polishing and/or crystallization pad so as to allow the pad to conform to irregularities in the floor. However, the cured resin should not be so soft as to cause undue frictional drag between the nonwoven surface treating articles and the floor being treated. Although not intending to be bound by any particular theory, it could be that the oxygenated organic compounds found useful in the invention serve to plasticize the cured resins, altering the glass transition temperature of the resin. In the case of the noniron-containing nonwoven articles useful in the invention being attached to a conventional electric floor polishing machine, high frictional drag may lead to increased amperage draw on the part of the floor machine and may cause electrical fuses to "blow" or circuit breakers to "trip".

Suitable resins will not readily undergo unwanted reactions, will be stable over a wide pH and humidity ranges, and will resist moderate oxidation and reduction. The cured resins should be stable at higher temperatures and have a relatively long shelf life.

The resins of the binders suitable for use in the noniron-containing nonwoven surface treating articles useful in the invention may comprise a wide variety of resins, including synthetic polymers such as styrenebutadiene (SBR) copolymers, carboxylated-SBR copolymers, melamine resins, phenol-aldehyde resins, polyesters, polyamides, polyureas, polyvinylidene chloride, polyvinyl chloride, acrylic acidmethylmethacrylate copolymers, acetal copolymers, polyurethanes, and mixtures and cross-linked versions thereof.

One preferred group of resins useful in the present invention, particularly if a substantial number of the fibers of the nonwoven web are polyester, are terpolymeric latex resins formed by linear or branched copolymerization of a mixture of a non-functionalized monoethylenically unsaturated co-monomer, a functionalized monoethylenically unsaturated co-monomer, and a non-functionalized diethylenically unsaturated co-monomer. ("Functionalized", as used herein, means a monomer having a reactive moiety such as -OH, NH2, COOH, and the like, wherein "non-functionalized" means a monomer lacking such a reactive moiety.)

Particularly preferred terpolymer latex resins, used when the fibers of the nonwoven web are substantially polyester, are formed by random or block terpolymerization of styrene, butadiene, and a functionalized monoethylenically unsaturated monomer selected from the group consisting of monomers having the general formula R¹R²C=CR³COOH and anhydrides thereof, wherein R¹ and R² are independently selected from H and CH₃, and R³ is selected from H, CH₃ and COOH. In commercially available resins of this type, the amount of functionalized monoethylenically unsaturated monomer is typically proprietary, but is believed to be about 1 to about 10 mole percent of the total monomer. The mole percent of styrene ranges from about 50 percent to about 80 percent, more preferably from about 60 to about 70 percent, particularly preferably about 65 percent, as mole percentage of styrene and butadiene.

One commercially available and particularly preferred terpolymer latex resin is that sold under the tradename "AMSCO RES 5900", from Unocal. This aqueous latex resin is a terpolymer of styrene/butadiene/functionalized monoethylenically unsaturated monomer having styrene/butadiene mole ratio of 65/35, 1-10 mole percent of functionalized monoethylenically unsaturated monomer, solids weight percent of 50, pH of 9.0, anionic particle charge, particle size of 0.2 micrometer, and glass transition temperature of -5°C. Higher butadiene mole ratios produce a softer resin, but at the cost of greater drag. Typical and preferred coatable binder precursor solutions containing this latex resin and abrasive particles which are useful in forming cured binders are presented in Table A (wet parts by weight).

The above described terpolymers may be used uncross-linked, but they are preferably cross-linked by the reaction of the reactive COOH moiety with a polyfunctionalized monomer, such as a phenolic or melamine resin, as indicated in Table A.

Cross-linking resins, as mentioned in Table A, below, may be used to improve the water and solvent resistance of the ultimate nonwoven surface treating articles of the invention, and to increase their firmness. Melamine-formaldehyde resins, such as the fully methylated melamine-formaldehyde resins having low free methylol content sold under the trade designations "Cymel 301", 1133, and 1168, "Cymel 303" and "Aerotex M-3" (all currently available from American Cyanamid Company), and the like, are suitable. The former provides slightly higher tensile strength while the latter enhances stiffness and resilience of the nonwoven. Phenolic resins have also been used as cross-linking resins, such as those sold under the trade designations "433" (Monsanto) and "R-7" (Carborundum), and the like.

The latex resins useful in the present invention, if cross-linked, will have greater than 10% cross-linking, usually having in the range from about 15% to 80% cross-linking, more usually having in the range from about 25% to 60% cross-linking, and typically being in the range from about 45% to 55% cross-linking. The cross-linked latex resin particles may act as organic fillers, helping to smooth the coating of the fibers of the nonwoven webs with the linear or branched copolymers.

The calculated or theoretical percentage of cross-linking is defined as the weight of polyfunctionalized monomer (or monomers) divided by the total weight of monomers.

**Table A:**

| **Preferred Binder Precursor Solutions** | | |
|---|---|---|
| Ingredient | Broad wt % Range | Preferred wt % Range |
| SBR latex (50% solids) | 20-40 | 25-35 |
| water | 2-10 | 2-6 |
| melamine-formaldehyde/crosslinking resin | 1-10 | 1-5 |
| silicon carbide abrasive particles, 30 micrometers or less avg. part. size | 10-65 | 40-60 |
| catalyst (40 % sol. of diammonium phosphate) | 0.1-0.5 | 0.1-0.3 |
| antifoam agent | 0.01-0.05 | 0.01-0.03 |
| surfactant | 0.1-1.0 | 0.1-0.5 |

Non-functionalized monoethylenically unsaturated monomers generally suitable for preparing linear, branched, and cross-linked latex resins useful herein include, styrene, ethylvinylbenzene, and vinyltoluene, with styrene being particularly preferred.

Diethylenically unsaturated monomers useful in the invention include isopropene, butadiene and chloroprene, with butadiene being particularly preferred.

If the nonwoven abrasive articles comprise a substantial amount of polyamide (e.g., nylon 6,6) fibers, other resins may be preferred as the resin component of the binder. Examples of suitable binders for use when the fibers comprise polyamides include: phenolic resins, aminoplast resins, urethane resins, urea-aldehyde resins, isocyanurate resins, and mixtures thereof.

Examples of commercially available phenolic resins include those known by the trade names "Varcum" and "Durez" (from Occidental Chemicals Corp., N. Tonawanda, New York), and "Arofene" (from Ashland Chemical Co.). The resole phenolic resin of choice has about 1.7:1 formaldehyde to phenol weight ratio, 76 weight percent solids.

In one preferred method for making noniron-containing nonwoven surface treating articles useful in the invention, a coatable binder precursor solution, comprising uncured resin, abrasive particles, and other ingredients, such as thickeners, depending on the coating procedure, is applied to a nonwoven web using two-roll coating. Then, during further processing, the binder precursor is cured or polymerized to form a cured binder. Other coating methods may of course be employed as are known in the art, such as spray coating, and the like. The binder precursor solution may be alternatively applied to the web without abrasive particles in the solution, with the abrasive particles electrostatically or mechanically deposited onto the web. However, it is preferred to mix the micro-abrasive particles used in the invention with the binder precursor solution to prevent unnecessary dust hazards.

Binder precursor solutions and cured binders suitable for use in the invention may contain appropriate curing agents, non-abrasive fillers, pigments, and other materials which are desired to alter the final properties of the noniron-containing nonwoven surface treating articles useful in the invention. In particular, in the floor finishing field, the color of the nonwoven surface treating articles serves to characterize the article (white being the least abrasive, darker colors indicating more abrasive). Thus, the resins, binder precursor solutions, and binders useful in the invention are preferably compatible or capable of being rendered compatible with pigments.

Another aspect of the invention is a system capable of crystallizing surfaces comprising calcium carbonate, the system comprising the nonwoven surface treating articles of the invention in combination with an acidic crystallization agent.

### Method of Crystallizing Marble Floors

One method of the invention comprises treating a surface which comprises calcium carbonate, for example marble, by applying (preferably spraying) a crystallization composition of the invention either to the marble surface or to a noniron-containing nonwoven surface treating article (or both). The noniron-containing nonwoven surface treating article is then contacted to the marble surface in the presence of the crystallization composition while creating relative movement between the surface and the nonwoven article, thereby producing a durable and preferably high gloss surface on the calcium carbonate-containing surface.

As stated above, crystallization composition of the invention is applied (preferably sprayed) either on to the surface to be treated, the nonwoven surface treating article, or both. The surface treating articles are preferably attached to a conventional floor machine adapted to operate at low speed (100-200 rpm), having heavy weights attached thereto. The total weight of machine and weights preferably ranges from about 32 kg to about 135 kg, more preferably from about 40 to about 82 kg. The exact machine, pad, rotary buffing speed, and weight are not critical to the practice of the invention, but as is well known in the art a heavier machine results in a higher gloss on a finished surface after the crystallization composition is applied. In the case of conventional floor machines, the noniron-containing nonwoven surface treating articles useful in the invention will preferably have a diameter ranging from about 25 to about 75 cm, more preferably ranging from about 40 to about 50 cm.

In the Test Procedures and Examples which follow, all parts and percentages are by weight. "APS" refers to average particle size.

### TEST PROCEDURES

### Gloss Measurements

Glossmeter geometries of 20° and 60° were used for gloss measurements, five per area buffed at each geometry. The measurements were made after buffing, and the average of these recorded. Test method ASTM D-523 was followed for determining specular gloss values. Note that "60° glossmeter geometry gloss" value (i.e., incident light reflected from the test surface at incident angle measured 60° from vertical) relates to the "shininess" of the surface and correlates to the appearance of the floor about 3 meters in front of the observer. A "20° glossmeter geometry gloss" value relates to the depth of the reflection and correlates to the appearance of the floor about 60 cm in front of the observer. A reading off a glossmeter is an indexed value, with a value of "100" given to the glossmeter reading (from any angle) from a highly polished, plane, black glass with a refractive index of 1.567 for the sodium D line. The incident beam is supplied by the tester itself. A value of 0 is no or very low gloss, while "high gloss" at 60° geometry is about 75 or greater (or 30 or greater at 20° geometry), which are preferred. A glossmeter known under the trade designation "Micro-TRI", from BYK Gardner, was used.

### Examples

### Examples 1 and 2 and Comparative Examples A and B Example 1 and Comparative Example A

A low density prebonded nonwoven web was formed for use in Examples 1 and Comparative Example A by a conventional web making machine (trade designation "Rando Webber"). The web formed was a blend of fibers comprising 75 weight percent of 84 mm long, 100 denier helically crimped PET polyester staple fibers having crimp index of 49%, and 25 weight percent of 58 mm long, 25 denier crimped sheath-core melt-bondable polyester staple fibers (core comprising polyethylene terephthalate, sheath comprising copolyester of ethylene terephthalate and isophthalate) having about 5 crimps per 25 mm and a sheath weight of about 50 percent. The formed web was heated in a hot convection oven for about three minutes at 160°C to bond the melt-bondable fibers together at points of intersection to form a prebond web. The prebonded web weighed about 420 g/m².

A binder precursor solution was prepared having about 77% by weight of non-volatile materials by combining the ingredients in the amounts indicated in Table 1.

**Table 1**

| INGREDIENT | (parts by weight) |
|---|---|
| Water | 4.0 |
| SBR latex ("AMSCO RES 5900") | 32.2 |
| melamine resin ("Cymel 303") | 3.2 |
| 30 micrometer and finer part. size silicon carbide | 60.0 |
| Diammonium phosphate, 40 wt% in water | 0.2 |
| antifoam ("DC Q2-3168")¹ | 0.02 |
| surfactant ("Triton GR-5M")² | 0.4 |

| | |
|---|---|
| 1 "DC Q2-3168" is a silicone emulsion surfactant available from Dow Corning | |
| 2 "Triton GR-5M" is a dioctyl sodium sulfosuccinate surfactant available from Rohm and Haas | |

The binder precursor solution was applied to the prebond web by passing the prebond web between a pair of vertically opposed, rotating, 250 mm diameter rubber covered squeeze rollers. The rotating lower roll, which was immersed in the binder precursor solution, carried the solution to the prebond web so as to evenly disperse it throughout the web structure. The wet prebond web was dried and the saturant cured in a hot air oven at about 175°C for about five to seven minutes. The dry, coated prebond web weighed about 1800 g/m².

The abrasive articles used in Example 2 and Comparative Example B were Jumbo #1 steel wool pads available from International Steel Wool, Inc.

The abrasive articles used in Examples 1 and 2 and Comparative Examples A and B were applied separately to a standard rotary floor maintenance machine and separately tested for gloss production on four different areas of the same floor as detailed in Table 2.

**Table 2**

| Gloss | Floor Area 1 (Example 1) | Floor Area 2 (Comparative Example A) | Floor Area 3 (Comparative Example B) | Floor Area 4 (Example 2) |
|---|---|---|---|---|
| Initial, 20° | 22.9 | 28.2 | 24.6 | 26.0 |
| Initial, 60° | 56.6 | 58.2 | 55.8 | 58.5 |
| Final, 20° | 46.1 | 51.8 | 30.7 | 17.4 |
| Final, 60° | 81.1 | 84.6 | 70.0 | 46.5 |
| KW* | 1.05 | 1.17 | 1.03 | 0.91 |

| | | | | |
|---|---|---|---|---|
| * KW = kilowatts used to drive the floor machine | | | | |

The system used for Example 1 of the invention consisted of the use of a 43 cm diameter noniron-containing nonwoven article prepared as above described, which was attached to a floor machine available from Mastercraft Corp., operated at 160 rpm, which had a weight of about 40 kilograms applied thereto. Floor areas 1-4 were white Calcutta marble floor tiles prepared using a 500 grit 3M diamond nonwoven abrasive article and was thoroughly dried prior to buffing with the composition of the invention and the comparative compositions.

For Example 1, the crystallization composition consisted of 75 weight percent water, 15 weight percent magnesium hexafluorosilicate, and 10 weight percent propylene glycol mono-methyl ether.

For Comparative Example A, the same nonwoven pad as described above for use in the system of Example 1 was used, however the crystallization composition consisted of only 85% water and 15% magnesium hexafluorosilicate.

For Comparative Example B, the nonwoven surface treating article used was a jumbo steel wool #1 pad and the crystallization composition consisted of 15 weight percent magnesium hexafluorosilicate and 85 weight percent water.

For the system of Example 2, again a jumbo steel wool #1 pad was used, but the crystallization composition of Example 1 was used.

From the data of Table 2 note that the area of the floor polished with the system of the invention (Example 1) increased the 20° and 60° gloss at least as well as Comparative Example A, while the 20° an 60° gloss actually decreased in Example 2, but a decrease in drag was observed in comparison to Comparative Example B. Thus, the use of the system of Example 1 (crystallization composition comprising a metal hexafluorosilicate, a glycol ether, and water, with a noniron-containing nonwoven abrasive article) increased gloss on white Calcutta marble surfaces, while the use of the system of Example 2 (steel wool pad with a glycol ether and a metal hexafluorosilicate) actually reduced gloss achieved on the same surface but reduced drag. Note also from Table 2 that the propylene glycol mono-methyl ether reduced the drag (measured in kilowatts, and converted into ft-lbs of torque) for both steel wool and the noniron-containing organic fiber nonwoven articles.

### Examples 3 and 4 and Comparative Examples C and D

For this set of Examples, methyl lactate was substituted for propylene glycol mono-methyl ether in the crystallization composition. Otherwise, the systems of Examples 1 and 3 were identical, as were the systems of Comparative Examples A and C, Comparative Examples B and D, and the systems of Examples 2 and 4. The abrasive articles used in Example 3 and 4 and Comparative Examples C and D were applied to a standard rotary floor maintenance machine and tested for gloss production on four different areas of the same floor as described in Table 2. The results are detailed in Table 3.

**Table 3**

| Gloss | Floor Area 1 (Example 3) | Floor Area 2 (Comparative Example C) | Floor Area 3 (Comparative Example D) | Floor Area 4 (Example 4) |
|---|---|---|---|---|
| Initial, 20° | 6.2 | 5.2 | 5.9 | 5.8 |
| Initial, 60° | 23.3 | 20.4 | 22.4 | 22.4 |
| Final, 20° | 48.2 | 52.2 | 16.6 | 35.8 |
| Final, 60° | 81.6 | 82.7 | 49.9 | 68.8 |
| KW | 1.1 | 1.22 | 1.23 | 1.1 |
| * KW = kilowatts used to drive the floor machine | | | | |

From the data of Table 3 note that the area of the floor polished with the system of Example 3 increased the 20° and 60° gloss at least as well the Comparative Example C, but the drag was less. Note that the use of the system of Example 4 consisting of a crystallization composition consisting of a metal hexafluorosilicate, methyl lactate, and water, with a steel wool pad increased gloss on white calcutta marble surfaces and decreased drag compared with the system of Comparative Example D.

## Claims

1. A composition suitable for use in crystallizing calcium carbonate-containing surfaces, the composition characterized by an effective amount of an oxygenated organic compound, a metal hexafluorosilicate, and water, wherein the organic compound having from 2 to 10 carbon atoms and a water solubility of greater than 0.1 weight percent at 20°C is selected from the group consisting of glycol ethers, alkyl alcohols, and alkyl esters.

2. Composition in accordance with claim 1 further characterized by said organic compound having an evaporation rate ranging from about 0.5 to about 300, where n-butyl acetate has an evaporation rate of 100.

3. Composition in accordance with claim 1 further characterized by said metal hexafluorosilicate is magnesium hexafluorosilicate.

4. Composition in accordance with claim 1 further characterized by said glycol ether being propylene glycol mono-methyl ether.

5. Composition in accordance with claim 1 further characterized by said glycol ether being ethylene glycol mono-n-butyl ether.

6. Composition in accordance with claim 1 further characterized by said alkyl ester being methyl lactate.

7. Composition in accordance with claim 1 further characterized by said alkyl alcohol being isobutanol.

8. A system for crystallizing surfaces comprised of calcium carbonate, such as marble floors, the system characterized by:
a) the crystallization composition of claim 1; and
b) a surface treating article selected from the group consisting of
i) a nonwoven surface treating article comprising an open, lofty, three-dimensional nonwoven web comprising a plurality of thermoplastic organic fibers of 15 to 200 denier, a binder which adheres said fibers at points of mutual contact, and abrasive particles adherently bonded to the fibers by said binder, and
ii) an article comprised of steel fibers.

9. A system for crystallizing and polishing surfaces comprised of calcium carbonate, such as marble floors, the system characterized by:
a) a crystallization composition comprising an effective amount of an alkyl ester according to claim 1, a metal hexafluorosilicate, and water; and
b) an article comprised of steel fibers.

10. A method of crystallizing a surface comprised of calcium carbonate, said method characterized by:
(a) applying an acidic crystallization agent either to said surface or to a nonwoven surface treating article, or both the surface and the article, the acidic crystallization agent comprising an effective amount of an oxygenated organic compound according to claim 1, a metal hexafluorosilicate, and water, the nonwoven surface treating article comprising an open, lofty, three-dimensional nonwoven abrasive web comprising a plurality of thermoplastic organic fibers of 15 to 200 denier, a binder, and abrasive particles; and
(b) contacting said nonwoven surface treating article with said surface while creating relative movement between the surface and the nonwoven surface treating article for a time sufficient to produce a durable finish on the surface.

11. A method of crystallizing and polishing a surface comprised of calcium carbonate, said method characterized by:
(a) applying an acidic crystallization agent either to said surface or to an article comprised of steel fibers, or both the surface and the article, the acidic crystallization agent comprising an effective amount of an alkyl lactate according to claim 1, a metal hexafluorosilicate, and water; and
(b) contacting said article with said surface while creating relative movement between the surface and the article for a time sufficient to produce a durable, high gloss finish on the surface.

## Patentansprüche

1. Zusammensetzung, die für die Verwendung beim Kristallisieren calciumcarbonathaltiger Oberflächen geeignet ist, wobei die Zusammensetzung durch eine wirksame Menge einer sauerstoffhaltigen organischen Verbindung, ein Metallhexafluorosilicat und Wasser gekennzeichnet ist, wobei die organische Verbindung 2 bis 10 Kohlenstoffatome enthält und bei 20°C eine Wasserlöslichkeit von mehr als 0,1 Gew.-% besitzt und aus der Gruppe ausgewählt ist, die aus Glycolethern, Alkylalkoholen und Alkylestern besteht.

2. Zusammensetzung gemäß Anspruch 1, dadurch gekennzeichnet, daß die organische Verbindung eine Verdampfungsgeschwindigkeit hat, die im Bereich von etwa 0,5 bis etwa 300 liegt, wenn n-Butylacetat eine Verdampfungsgeschwindigkeit von 100 hat.

3. Zusammensetzung gemäß Anspruch 1, dadurch gekennzeichnet, daß es sich bei dem Metallhexafluorosilicat um Magnesiumhexafluorosilicat handelt.

4. Zusammensetzung gemäß Anspruch 1, dadurch gekennzeichnet, daß es sich bei dem Glycolether um Propylenglycolmonomethylether handelt.

5. Zusammensetzung gemäß Anspruch 1, dadurch gekennzeichnet, daß es sich bei dem Glycolether um Ethylenglycolmono-n-butylether handelt.

6. Zusammensetzung gemäß Anspruch 1, dadurch gekennzeichnet, daß es sich bei dem Alkylester um Methyllactat handelt.

7. Zusammensetzung gemäß Anspruch 1, dadurch gekennzeichnet, daß es sich bei dem Alkylalkohol um Isobutanol handelt.

8. System zum Kristallisieren von Oberflächen, die Calciumcarbonat umfassen, wie Marmorböden, wobei das System gekennzeichnet ist durch:
a) die Kristallisationszusammensetzung von Anspruch 1; und
b) einen Oberflächenbehandlungsgegenstand, der aus der Gruppe ausgewählt ist, die aus
i) einem ungewebten Oberflächenbehandlungsgegenstand, der einen offenen, locker-elastischen, dreidimensionalen ungewebten Textilstoff umfaßt, der eine Vielzahl thermoplastischer organischer Fasern von 15 bis 200 denier, ein Bindemittel, das die Fasern an den Punkten des gegenseitigen Kontaktes miteinander verklebt, sowie Schleifteilchen, die durch das Bindemittel an die Fasern geklebt sind, umfaßt, sowie
ii) einem Gegenstand, der Stahlfasern umfaßt,
besteht.

9. System zum Kristallisieren und Polieren von Oberflächen, die Calciumcarbonat umfassen, wie Marmorböden, wobei das System gekennzeichnet ist durch:
a) eine Kristallisationszusammensetzung, die eine wirksame Menge eines Alkylesters gemäß Anspruch 1, ein Metallhexafluorosilicat und Wasser umfaßt; sowie
b) einen Gegenstand, der Stahlfasern umfaßt.

10. Verfahren zum Kristallisieren einer Oberfläche, die Calciumcarbonat umfaßt, wobei das Verfahren gekennzeichnet ist durch:
(a) Auftragen eines sauren Kristallisationsmittels entweder auf die Oberfläche oder auf einen ungewebten Oberflächenbehandlungsgegenstand oder sowohl auf die Oberfläche als auch auf den Gegenstand, wobei das saure Kristallisationsmittel eine wirksame Menge einer sauerstoffhaltigen organischen Verbindung gemäß Anspruch 1, ein Metallhexafluorosilicat und Wasser umfaßt, wobei der ungewebte Oberflächenbehandlungsgegenstand einen offenen, locker-elastischen, dreidimensionalen ungewebten Schleiftextilstoff umfaßt, der eine Vielzahl thermoplastischer organischer Fasern von 15 bis 200 denier, ein Bindemittel und Schleifteilchen umfaßt; sowie
(b) In-Kontakt-Bringen des ungewebten Oberflächenbehandlungsgegenstands mit der Oberfläche, wobei man während einer Zeit, die ausreicht, um eine dauerhafte gute Oberflächenqualität zu erzeugen, für eine relative Bewegung zwischen der Oberfläche und dem ungewebten Oberflächenbehandlungsgegenstand sorgt.

11. Verfahren zum Kristallisieren und Polieren einer Oberfläche, die Calciumcarbonat umfaßt, wobei das Verfahren gekennzeichnet ist durch:
(a) Auftragen eines sauren Kristallisationsmittels entweder auf die Oberfläche oder auf einen Gegenstand, der Stahlfasern umfaßt, oder sowohl auf die Oberfläche als auch auf den Gegenstand, wobei das saure Kristallisationsmittel eine wirksame Menge eines Alkyllactats gemäß Anspruch 1, ein Metallhexafluorosilicat und Wasser umfaßt; sowie
(b) In-Kontakt-Bringen des Gegenstands mit der Oberfläche, wobei man während einer Zeit, die ausreicht, um eine dauerhafte gute Oberflächenqualität mit hohem Glanz zu erzeugen, für eine relative Bewegung zwischen der Oberfläche und dem Gegenstand sorgt.

## Revendications

1. Composition appropriée pour utilisation dans la cristallisation de surfaces contenant du carbonate de calcium, la composition étant caractérisée par une quantité efficace d'un composé organique oxygéné, d'un hexafluorosilicate de métal, et d'eau, où le composé organique ayant de 2 à 10 atomes de carbone et une solubilité dans l'eau supérieure à 0,1% en poids à 20°C est choisi dans le groupe constitué par les éthers de glycol, les alcools alkyliques et les esters alkyliques.

2. Composition selon la revendication 1, caractérisée en outre en ce que ledit composé organique a une vitesse d'évaporation comprise entre environ 0,5 et environ 300, l'acétate de n-butyle ayant une vitesse d'évaporation de 100.

3. Composition selon la revendication 1, caractérisée en outre en ce que ledit hexafluorosilicate de métal est l'hexafluorosilicate de magnésium.

4. Composition selon la revendication 1, caractérisée en outre en ce que ledit éther de glycol est l'éther monométhylique de propylèneglycol.

5. Composition selon la revendication 1, caractérisée en outre en ce que ledit éther de glycol est l'éther mono-n-butylique d'éthylèneglycol.

6. Composition selon la revendication 1, caractérisée en outre en ce que ledit ester d'alkyle est le lactate de méthyle.

7. Composition selon la revendication 1, caractérisée en outre en ce que ledit alcool d'alkyle est l'isobutanol.

8. Système de cristallisation de surfaces constituées de carbonate de calcium, comme les sols de marbre, le système étant caractérisé par:
a) la composition pour cristallisation de la revendication 1; et
b) un article de traitement de surface choisi dans le groupe constitué par
i) un article de traitement de surface non tissé comprenant un voile non tissé tridimensionnel ouvert, étiré en hauteur, comprenant plusieurs fibres organiques thermoplastiques de 15 à 200 deniers, un liant qui fait adhérer lesdites fibres en des points de contact mutuel, et des particules abrasives fixées par adhérence aux fibres au moyen dudit liant, et
ii) un article constitué de fibres d'acier.

9. Système pour cristalliser et polir des surfaces constituées de carbonate de calcium, comme les sols de marbre, le système étant caractérisé par:
a) une composition pour cristallisation comprenant une quantité efficace d'un ester d'alkyle selon la revendication 1, d'un hexafluorosilicate de métal, et d'eau; et
b) un article constitué de fibres d'acier.

10. Procédé de cristallisation d'une surface constituée de carbonate de calcium, ledit procédé étant caractérisé par:
a) l'application d'un agent de cristallisation acide soit à ladite surface, soit à un article de traitement de surface non tissé, soit à la fois à la surface et à l'article, l'agent de cristallisation acide comprenant une quantité efficace d'un composé organique oxygéné selon la revendication 1, d'un hexafluorosilicate de métal, et d'eau, l'article de traitement de surface non tissé comprenant un voile abrasif non tissé tridimensionnel ouvert, étiré en hauteur, comprenant plusieurs fibres organiques thermoplastiques de 15 à 200 deniers, un liant, et des particules abrasives; et
b) la mise en contact dudit article de traitement de surface non tissé avec ladite surface tout en créant un mouvement relatif entre la surface et l'article de traitement de surface non tissé pendant une durée suffisante pour produire un fini durable à la surface.

11. Procédé de cristallisation et de polissage d'une surface constituée de carbonate de calcium, ledit procédé étant caractérisé par:
a) l'application d'un agent de cristallisation acide soit à ladite surface, soit à un article constitué de fibres d'acier, soit à la fois à la surface et à l'article, l'agent de cristallisation acide comprenant une quantité efficace d'un lactate d'alkyle selon la revendication 1, d'un hexafluorosilicate de métal, et d'eau; et
b) la mise en contact dudit article avec ladite surface tout en créant un mouvement relatif entre la surface et l'article pendant une durée suffisante pour produire un fini durable, de brillant élevé, sur la surface.
